(19) Europäisches Patentamt European Patent Office Office européen des brevets

(11) **EP 2 054 457 B1**

(12) **EUROPEAN PATENT SPECIFICATION**

(45) Date of publication and mention
of the grant of the patent:
**10.08.2011 Bulletin 2011/32**

(51) Int Cl.:
*C08G 18/28* (2006.01)    *C08G 18/10* (2006.01)
*C08G 18/73* (2006.01)    *C08G 18/79* (2006.01)
*C08G 18/78* (2006.01)    *C09D 175/06* (2006.01)

(21) Application number: **06813422.0**

(22) Date of filing: **14.08.2006**

(86) International application number:
**PCT/US2006/031676**

(87) International publication number:
**WO 2008/020832 (21.02.2008 Gazette 2008/08)**

(54) **LOW SURFACE ENERGY POLYISOCYANATES AND THEIR USE IN TWO-COMPONENT COATING COMPOSITIONS**

POLYISOCYANATE MIT NIEDRIGER OBERFLÄCHENENERGIE UND IHRE VERWENDUNG IN ZWEIKOMPONENTIGEN BESCHICHTUNGSZUSAMMENSETZUNGEN

POLYISOCYANATES AYANT UNE FAIBLE ÉNERGIE DE SURFACE ET LEUR UTILISATION DANS DES COMPOSITIONS DE REVÊTEMENT À DEUX COMPOSANTS

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**06.05.2009 Bulletin 2009/19**

(73) Proprietor: **Bayer MaterialScience LLC Pittsburgh, PA 15205-9741 (US)**

(72) Inventors:
• **ROESLER, Richard, R.**
**Wexford, PA 15090-7583 (US)**
• **GARRETT, James**
**Palmyra, VA 22963 (US)**
• **LOCKHART, Aaron, A.**
**Pittsburgh, PA 15235 (US)**
• **KINNEY, Carol, L.**
**Eighty Four, PA 15330-0583 (US)**

(74) Representative: **Marx, Thiemo Patrick**
**Bayer MaterialScience AG**
**LP Patents and Licensing**
**Geb.: Q 18 / 1357 LEV LEV**
**51368 Leverkusen (DE)**

(56) References cited:
**DE-A1- 19 503 284    US-A- 5 691 439**

**Description**

**BACKGROUND OF THE INVENTION**

**Field of the Invention**

The present invention is directed to low surface energy polyisocyanates which contain urethane groups and siloxane groups and are prepared by reacting certain polyisocyanate adducts with compounds containing hydroxyl and siloxane groups, and to their use in two-component coating compositions.

**Description of Related Art**

Polyurethane coating compositions containing a polyisocyanate component, in either blocked or unblocked form, and an isocyanate-reactive component, generally a high molecular weight polyol, are well known.

Although coatings prepared from these compositions possess many valuable properties, one property, in particular, which needs to be improved is the surface quality. It can be difficult to formulate coating compositions to obtain a coating having a smooth surface as opposed to one containing surface defects such as craters, etc.

It is believed that these difficulties are related to the high surface tension of the two-component coating compositions. Another problem caused by the high surface tension is the difficulty in cleaning the coatings. Regardless of their potential application area, there is a high likelihood that the coatings will be subjected to stains, graffiti, etc.

The incorporation of either fluorine or siloxane groups into polyisocyanates via allophanate groups in order to reduce the surface tension of the polyisocyanates and the surface energy of the resulting polyurethane coatings is disclosed in U.S. Patents 5,541.,281; 5,574,122; 5,576,411; 5,646,227; 5,691,439; and 5,747,629. A disadvantage of the polyisocyanates disclosed in these patents is that they are prepared by reacting an excess of monomeric diisocyanates with the compounds containing either fluorine or siloxane groups. After the reaction is terminated the unreacted monomeric diisocyanates must be removed by an expensive thin film distillation process.

In accordance with copending applications, U.S. Serial Nos. 11/096,590 and 11/097,438. these difficulties may be overcome by using polyisocyanate adducts instead of monomeric diisocyanates to prepare the low surface energy polyisocyanates containing allophanate groups and either siloxane groups or fluorine. Both the copending applications and the previously discussed patents disclose that it is necessary for the polyisocyanate mixtures to contain more allophanate groups than urethane groups to avoid obtaining polyisocyanate mixtures that are cloudy or contain gel particles and to avoid obtaining coatings from these polyisocyanate mixtures that are cloudy in appearance.

Accordingly, it is an object of the present invention to provide low surface energy polyisocyanates which contain urethane groups and siloxane groups, can be obtained as a clear solution and can be used to prepare clear coatings. It is an additional object of the present invention to provide polyisocyanates which have reduced surface tension and, thus, are suitable for the production of coatings which have lower surface energies, improved surfaces and improved cleanability and which also possess the other valuable properties of the known polyurethane coatings. It is a final object of the present invention to provide polyisocyanates that attain the preceding objectives and can be prepared by a less complicated urethanization process.

Surprisingly, these objectives may be achieved with the polyisocyanate mixtures according to the present invention which contain urethane groups and siloxane groups and which are prepared from the polyisocyanate adducts described hereinafter.

**SUMMARY OF THE INVENTION**

The present invention is directed to a polyisocyanate mixture

i) having a monomeric diisocyanate content of less than 3% by weight,
ii) having a urethane group content of more than 50 equivalent %, based on the total equivalents of urethane and allophanate groups, and
iii) containing siloxane groups (calculated as SiO, MW 44) in an amount of 0.002 to 50% by weight,

wherein the preceding percentages are based on the solids content of the polyisocyanate mixture and wherein the siloxane groups are incorporated by reacting

a) an isocyanate group from a polyisocyanate adduct containing at least 60% by weight, based on the total weight of the polyisocyanate adduct, of a polyisocyanate adduct which is prepared from 1,6-hexamethylene diisocyanate, contains isocyanurate, iminooxadiazine dione and/or uretdione groups and has a viscosity at 25°C and 100% solids of less than 2000 mPa.s, with

b) a compound containing one or more hydroxyl groups directly attached to a carbon atom and one or more siloxane groups to form urethane groups.

The present invention also relates to the use of this polyisocyanate mixture, optionally in blocked form, as an isocyanate component in two-component coating compositions.

## DETAILED DESCRIPTION OF THE INVENTION

In accordance with the present invention the polyisocyanate mixtures are prepared from low viscosity, polyisocyanate adducts. Suitable polyisocyanate adducts are those which contain at least 60% by weight, preferably at least 80% by weight and more preferably at least 90% by weight, based on the total weight of the polyisocyanate adducts, of polyisocyanate adducts which are prepared from 1,6-hexamethylene diisocyanate, contain isocyanurate, iminooxadiazine dione and/or uretdione groups and have a viscosity at 25°C and 100% solids of less than 2000 mPa.s, preferably less than 1500 mPa.s. The preceding weight percents of the polyisocyanate adducts that contain isocyanurate, iminooxadiazine dione and/or uretdione groups are based on the total weight of the polyisocyanate adducts containing isocyanurate groups, the polyisocyanate adducts containing iminooxadiazine dione groups and the polyisocyanate adducts containing uretdione groups.

The term "polyisocyanate adduct" refers to the mixture of compounds obtained when 1,6-hexamethylene diisocyanate is reacted to form individual molecules wherein each molecule contains an isocyanurate group, an iminooxadiazine dione group or a uretdione group. It is possible that some high molecular weight oligomers may contain more than one of these groups. Therefore, the resulting polyisocyanate adduct, which is made up of all the individual molecules, contains isocyanurate groups, iminooxadiazine dione groups and/or uretdione groups.

In one embodiment of the present invention iminooxadiazine dione groups are present in admixture with the isocyanurate groups in an amount of at least 10% by weight, preferably at least 15% by weight and more preferably at least 20% by weight, based on the total weight of the polyisocyanate adducts containing either iminooxadiazine dione or isocyanurate groups.

In another embodiment of the present invention uretdione groups are present in admixture with the isocyanurate groups in an amount of at least 30% by weight, preferably at least 40% by weight and more preferably at least 50% by weight, based on the total weight of the polyisocyanate adducts containing either uretdione or isocyanurate groups.

The low viscosity, isocyanurate group-containing polyisocyanates may be prepared by trimerizing hexamethylene diisocyanate until the reaction mixture has an NCO content of 42 to 45% by weight, preferably 42.5 to 44.5% by weight, subsequently terminating the reaction and removing unreacted hexamethylene diisocyanate by distillation to a residual content of less than 0.5 wt.%. Suitable processes are disclosed in DE-PS 2,616,416, EP-OS 3,765, EP-OS 10,589, EP-OS 47,452 and US-PS 4,324,879.

Iminooxadiazine dione and optionally isocyanurate group-containing polyisocyanates may be prepared in the presence of special fluorine-containing catalysts as described in DE-A 19611849.

Uretdione diisocyanates and optionally isocyanurate group-containing polyisocyanates may be prepared by oligomerizing a portion of the isocyanate groups of hexamethylene diisocyanate in the presence of a suitable catalyst, e.g., a trialkyl phosphine catalyst.

The polyisocyanate adducts containing isocyanurate, iminooxadiazine dione and/or uretdione groups preferably have an average NCO functionality of 2 to 4, more preferably 2.2 to 3.5, and an NCO content of 5 to 30%, more preferably 10 to 25% and most preferably 15 to 25% by weight.

Other polyisocyanate adducts, which may be present in amounts of up to 40% by weight, preferably up to 20% by weight and more preferably up to 10% by weight, include adducts containing biuret, urethane or carbodiimide groups.

Suitable compounds containing hydroxyl groups and siloxane groups, which are suitable for preparing the polyisocyanate mixtures according to the invention, are those containing one or more (preferably one or two and more preferably one) hydroxyl groups directly attached to carbon atoms, and one or more siloxane groups, preferably in the form of dimethyl siloxane groups, $-Si(CH_3)_2O-$.

Examples of these compounds are those corresponding to the formula

$$HO-R^1-X-[Si(R^2)_2O-]_n-[Si(R^2)_2-X]_m-R^1-Y$$

wherein

R$^1$    represents an optionally inertly substituted, divalent hydrocarbon radical, preferably an alkylene radical (such as methylene, ethylene, propylene or butylene),or a polyoxyalkylene group (such as a polyoxyethylene or polyoxy-propylene group),

R$^2$    represents hydrogen or an optionally inertly substituted lower alkyl, phenyl or benzyl group, preferably methyl or ethyl and more preferably methyl,

X    represents a linkage between an R$^1$ group and a Si atom, e.g., a covalent bond, -O- or -COO-,

Y    represents hydrogen or OH,

m    is 0 or 1 and

n    is an integer from 1 to 1,000, preferably 2 to 100 and more preferably 4 to 15.

Inert substituents are those that do not interfere with the reaction of the siloxane compound with the polyisocyanate or the urethanization reaction of the isocyanate groups. Examples include halogen atoms such as fluorine.

Examples of compounds containing one isocyanate-reactive group in which R$^1$ represents an oxyalkylene group are compounds corresponding to the formula

$$HO\text{-}(CHR^3\text{-}CH_2O\text{-})_o\text{-}(R^4)_m\text{-}[Si(R^2)_2O\text{-}]_n\text{-}[Si(R^2)_2\text{-}X']_m\text{-}R^4\text{-}H$$

and examples of compounds containing more than one isocyanate-reactive group in which R$^1$ represents an oxyalkylene group are compounds corresponding to the formula

$$HO\text{-}(CHR^3\text{-}CH_2O\text{-})_o\text{-}(R^4)_m\text{-}[Si(R^2)_2O\text{-}]_n\text{-}(CH_2\text{-}CHR^3\text{-}O\text{-})_p\text{-}CH_2\text{-}CHR^3\text{-}OH$$

wherein
R$^2$ m and n are as defined above,

R$^3$    represents hydrogen or an alkyl group having 1 to 12 carbon atoms, preferably hydrogen or methyl,

R$^4$    represents an optionally inertly substituted, divalent hydrocarbon radical, preferably an alkylene radical (such as methylene, ethylene, propylene or butylene),

X'    represents a linkage between an R$^4$ group and a Si atom, e.g., a covalent bond, -O- or -COO-,

o    is an integer from 1 to 200, preferably 2 to 50 and more preferably 4 to 25 and

p    is an integer from 0 to 200, preferably 2 to 50 and more preferably 4 to 25.

These siloxane compounds are prepared by reacting the appropriate siloxane with an amount of an alkylene oxide (preferably ethylene or propylene oxide) sufficient to prepare a compound having the desired siloxane content.

Other suitable siloxane-containing compounds may be linear, branched or cyclic and have a molecular weight (number average molecular weight as determined by gel permeation chromatography using polystyrene as standard) of up to 50,000, preferably up to 10,000, more preferably up to 6000 and most preferably up to 2000. These compounds generally have OH numbers of greater than 5, preferably greater than 25 and more preferably greater than 35. Compounds of this type are disclosed in "Silicon Compounds", 5th Edition, which is available from Hüls America, Inc.

To prepare the polyisocyanates mixtures according to the invention the minimum ratio of siloxane-containing compounds to polyisocyanate adduct is about 0.01 millimoles of siloxane-containing compounds for each mole of polyisocyanates adduct. The maximum amount of siloxane-containing compounds to polyisocyanate adduct is about 500 millimoles, preferably about 100 millimoles and more preferably about 20 millimoles of siloxane-containing compounds for each mole of polyisocyanate adduct. The amount of siloxane is selected such that the resulting polyisocyanate mixture contains a minimum of 0.002% by weight, preferably 0.02% by weight and more preferably 0.2% by weight, of siloxane groups (calculated as SiO, MW 44), based on solids, and a maximum of 50% by weight, preferably 10% by weight, more preferably 7% by weight and most preferably 3% by weight of siloxane groups, based on solids.

Suitable methods for preparing the polyisocyanate mixtures containing urethane groups are known. The urethanization reaction may be conducted at a temperature of 40 to 140°C, preferably 60 to 90°C and more preferably 70 to 80°C, in the presence of a known urethane catalyst, such as an organometallic salt or a tertiary amine. The reaction may be terminated by reducing the reaction temperature, by removing the catalyst, e.g., by applying a vacuum, or by the addition of a catalyst poison. After the reaction is terminated, there is no need to remove, unreacted monomeric diisocyanates, e.g., by thin film evaporation, because polyisocyanate adducts having low monomeric diisocyanate contents are used as the starting material.

The urethanization reaction may be carried out in the absence or in the presence of solvents which are inert to isocyanate groups, preferably in the absence of solvents, especially when liquid starting materials are used. Depending on the area of application of the products according to the invention, low to medium-boiling solvents or high-boiling solvents can be used. Suitable solvents include esters such as ethyl acetate or butyl acetate; ketones such as acetone or butanone; aromatic compounds such as toluene or xylene; halogenated hydrocarbons such as methylene chloride and trichloroethylene; ethers such as diisopropylether; and alkanes such as cyclohexane, petroleum ether or ligroin.

The process according to the invention may take place either batchwise or continuously, for example, as described below. The starting polyisocyanate adduct is introduced with the exclusion of moisture and optionally with an inert gas into a suitable stirred vessel or tube and optionally mixed with a solvent which is inert to isocyanate groups such as toluene, butyl acetate, diisopropylether or cyclohexane. The previously described compounds containing hydroxyl and siloxane groups may be introduced into the reaction vessel in accordance with several embodiments. They may be mixed with the polyisocyanate adducts and introduced into the reaction vessel; they may be separately added to the reaction vessel either before or after, preferably after, the polyisocyanate adducts are added; or the catalyst may be dissolved in these compounds prior to introducing the solution into the reaction vessel.

The progress of the reaction is followed by determining the NCO content by a suitable method such as titration, refractive index or IR analysis. Thus, the reaction may be terminated at the desired degree of urethanization, preferably at the theoretical NCO content.

The polyisocyanate mixtures obtained in accordance with the present invention have an average functionality of preferably about 1 to 6, more preferably 1.8 to 4; an NCO content of preferably 1 to 30% by weight, more preferably 1 to 25% by weight and most preferably 5 to 25% by weight; and a monomeric diisocyanate content of less than 3% by weight, preferably less than 2% by weight and more preferably less than 1% by weight. The polyisocyanate mixtures have a urethane group content (calculated as $N,C,H,O_2$, MW 59) of preferably at least 0.0005% by weight, more preferably at least 0.005% by weight and most preferably at least 0.3% by weight. The upper limit for the urethane group content is preferably 15% by weight, preferably 6% by weight and most preferably 3% by weight. The preceding percentages are based on the solids content of the polyisocyanate mixtures.

The products according to the present invention are polyisocyanate mixtures containing urethane groups and siloxane groups. The products may also contain a minor amount of allophanate groups depending upon the temperature maintained during the urethanization reaction and the degree of isocyanate group consumption. It is preferred that the urethane group content is more than 50%, more preferably more than 70% and most preferably more than 90%, based on the total equivalents of urethane and allophanate groups. Preferably, the polyisocyanate mixtures remain stable and homogeneous in storage for 1 month at 25°C, more preferably for 3 months at 25°C.

The products according to the invention are valuable starting materials for the production of polyisocyanate polyaddition products by reaction with compounds containing at least two isocyanate reactive groups. The products according to the invention may also be moisture-cured to form coatings. Preferred products are one or two-component coating compositions, more preferably polyurethane coating compositions. When the polyisocyanates are unblocked, two-component compositions are obtained. To the contrary when the polyisocyanates are blocked, one-component compositions are obtained.

Prior to their use in coating compositions, the polyisocyanate mixtures according to the invention may be blended with other known polyisocyanates, e.g., polyisocyanate adducts containing biuret, isocyanurate, urethane, urea, carbodiimide, and/or uretdione groups. The amount of the polyisocyanates mixtures according to the invention that must be blended with these other polyisocyanates is dependent upon the siloxane content of the polyisocyanate mixtures according to the invention, the intended application of the resulting coating compositions and the amount of low surface energy properties which are desired for this application.

To obtain low surface energy properties the resulting polyisocyanate blends should contain a minimum of 0.002% by weight, preferably 0.02% by weight and more preferably 0.2% by weight, of siloxane groups (MW 44), based on solids, and a maximum of 10% by weight, preferably 7% by weight and more preferably 3% by weight of siloxane groups (MW 44), based on solids. While siloxane group contents of greater that 10% by weight are also suitable for providing low surface energy coatings, there are no further improvements to be obtained by using higher quantities. By knowing the siloxane content of the polyisocyanate mixtures according to the invention and the desired siloxane content of the resulting polyisocyanate blends, the relative amounts of the polyisocyanate mixtures and the other polyisocyanates may be readily determined.

In accordance with the present invention any of the polyisocyanate mixtures according to the invention can be blended with other polyisocyanates, provided that the resulting blends have the minimum siloxane content required for the polyisocyanate mixtures of the present invention. However, the polyisocyanate mixtures to be blended preferably have a minimum siloxane content of 5% by weight, more preferably 10% by weight, and preferably have a maximum siloxane content of 50% by weight, more preferably 40% by weight and most preferably 30% by weight. These so-called "concentrates" may then be blended with other polyisocyanates to form polyisocyanate blends that may be used to prepare coatings having low surface energy characteristics.

Several advantages are obtained by preparing concentrates with high siloxane contents and subsequently blending them with non-siloxane-containing polyisocyanates. Initially, it is possible to convert many products to low surface energy polyisocyanates while only producing one concentrate. By forming such low surface energy polyisocyanates by blending commercially available polyisocyanates with concentrates, it is not necessary to separately prepare each of the products in both a siloxane-containing and a non-siloxane-containing form. One possible disadvantage of the highest siloxane contents is that all of the isocyanate groups of a small portion of the starting polyisocyanate adducts may be reacted. These molecules that do not contain isocyanate groups cannot react into the resulting coating and, thus, may adversely affect the properties of the final coating.

Preferred reaction partners for the products according to the invention are the polyhydroxy polyesters, polyhydroxy polyethers, polyhydroxy polyacrylates, polyhydroxy polylactones, polyhydroxy polyurethanes, polyhydroxy polyepoxides and optionally low molecular weight, polyhydric alcohols known from polyurethane coatings technology. Polyamines, particularly in blocked form, for example as polyketimines, oxazolidines or polyaldimines are also suitable reaction partners for the products according to the invention. Also suitable are polyaspartic acid derivatives (aspartates) containing secondary amino groups, which also function as reactive diluents.

To prepare the coating compositions the amount of the polyisocyanate component and the isocyanate reactive component are selected to provide equivalent ratios of isocyanate groups (whether present in blocked or unblocked form) to isocyanate-reactive groups of about 0.8 to 3, preferably about 0.9 to 1.5. The coating compositions may be cured either at ambient temperature or at elevated temperature.

To accelerate hardening, the coating compositions may contain known polyurethane catalysts, e.g., tertiary amines such as triethylamine, pyridine, methyl pyridine, benzyl dimethylamine, N,N-dimethylamino cyclohexane, N-methyl-piperidine, pentamethyl diethylene triamine, 1,4-diazabicyclo[2,2,2]-octane and N,N'-dimethyl piperazine; or metal salts such as iron(III)-chloride, zinc chloride, zinc-2-ethyl caproate, tin(II)-ethyl caproate, dibutyltin(IV)-dilaurate and molybdenum glycolate.

The products according to the invention are also valuable starting materials for one-component, moisture cure coating compositions or one-component coating compositions, preferably polyurethane coating compositions, in which the isocyanate groups are used in a form blocked by known blocking agents. The blocking reaction is carried out in known manner by reacting the isocyanate groups with suitable blocking agents, preferably at an elevated temperature (e.g. about 40 to 160°C), and optionally in the presence of a suitable catalyst, for example, the previously described tertiary amines or metal salts.

Suitable blocking agents include monophenols such as phenol, the cresols, the trimethylphenols and the tert. butyl phenols; tertiary alcohols such as tert. butanol, tert. amyl alcohol and dimethylphenyl carbinol; compounds which easily form enols such as acetoacetic ester, acetyl acetone and malonic acid derivatives, e.g. malonic acid diethylester; secondary aromatic amines such as N-methyl aniline, the N-methyl toluidines, N-phenyl toluidine and N-phenyl xylidine; imides such as succinimide; lactams such as ε-caprolactam and δ-valerolactam; pyrazoles such as 3,5-dimethyl pyrazole; oximes such as butanone oxime, methyl amyl ketoxime and cyclohexanone oxime; mercaptans such as methyl mercaptan, ethyl mercaptan, butyl mercaptan, 2-mercaptobenzthiazole, α-naphthyl mercaptan and dodecyl mercaptan; and triazoles such as 1H-1,2,4-triazole.

The polyisocyanate mixtures according to the invention may also be used as the polyisocyanate component in two-component water borne coating compositions. To be useful in these compositions the polyisocyanate mixtures may be rendered hydrophilic either by blending with external emulsifiers or by a reaction with compounds containing cationic, anionic or non-ionic groups. The reaction with the hydrophilic compound may be carried out either before or after the urethanization reaction to incorporate the siloxane-containing compound. Methods for rendering the polyisocyanates hydrophilic are disclosed in copending application, U.S. Patents 5,194,487 and 5,200,489.

The reduced surface tensions of the modified polyisocyanate mixtures enhance pigment dispersion and substrate wetting.

The coating compositions may also contain other additives such as pigments, dyes, fillers, levelling agents and solvents. The coating compositions may be applied to the substrate to be coated in solution or from the melt by conventional methods such as painting, rolling, pouring or spraying.

The coating compositions containing the polyisocyanate mixtures according to the invention provide coatings which have good dry times, adhere surprisingly well to a metallic base, and are particularly light-fast, color-stable in the presence of heat and very resistant to abrasion. They are also characterized by high hardness, elasticity, very good resistance to chemicals, high gloss, good weather resistance, good environmental etch resistance and good pigmenting qualities. Above all, the coating compositions have an excellent surface appearance and excellent cleanability.

The invention is further illustrated, but is not intended to be limited by the following examples in which all parts and percentages are by weight unless otherwise specified.

## EXAMPLES

### Siloxane Alcohol 0411

A butyl initiated, carbinol-terminated, polydimethylsiloxane alcohol having a molecular weight of about 1000 (available from Chisso Corp. as Silaplane FM-0411).

### Siloxane Alcohol 4411

A carbinol-terminated, polydimethylsiloxane diol having a molecular weight of about 1000 (available from Chisso Corp. as Silaplane FM-4411).

### Polyisocyanate 3400

An uretdione and isocyanurate group-containing polyisocyanate prepared from 1,6-hexamethylene diisocyanate and having an isocyanate content of 21.5%, a content of monomeric diisocyanate of <0.50%, a viscosity at 25°C of 200 mPa.s and a surface tension of 40 dynes/cm (available from Bayer Material Science as Desmodur N 3400).

### Polyisocyanate 3600

An isocyanurate group-containing polyisocyanate prepared from 1,6-hexamethylene diisocyanate and having an isocyanate content of 22.8%, a content of monomeric diisocyanate of <0.25%, a viscosity at 25°C of 1145 mPa.s and a surface tension of 45 dynes/cm (available from Bayer Material Science as Desmodur N 3600).

### Polyisocyanate 2410

An isocyanurate and iminooxadiazine dione group-containing polyisocyanate prepared from 1,6-hexamethylene diisocyanate and having an isocyanate content of 23.6%, a content of monomeric diisocyanate of <0.30%, a viscosity at 25°C of 640 mPa.s and a surface tension of 40 dynes/cm (available from Bayer Material Science as Desmodur XP 2410).

### Polyisocyanate 3200

A biuret group-containing polyisocyanate prepared from 1,6-hexamethylene diisocyanate and having an isocyanate content of 23%, a content of monomeric diisocyanate of <0.70%, a viscosity at 25°C of 1750 mPa.s and a surface tension of 47 dynes/cm (available from Bayer Material Science as Desmodur N 3200).

### Polyisocyanate 3300

An isocyanurate group-containing polyisocyanate prepared from 1,6-hexamethylene diisocyanate and having an isocyanate content of 21.6%, a content of monomeric diisocyanate of <0.3%, a viscosity at 25°C of 3000 mPa.s and a surface tension of 46 dynes/cm (available from Bayer MaterialScience LLC as Desmodur N 3300).

### Polyester Polyol 670

A trifunctional polyester polyol supplied at 80% solids in n-butyl acetate and having an average equivalent weight of 500 and a viscosity of 2550 mPa.s @ 25°C (available from Bayer MaterialScience LLC as Desmophen 670A80).

### Surface tension of liquid samples

The Wilhelmy plate technique (flamed glass slides) was used to determine surface tension. Samples were analyzed with a Cahn DCA 312 dynamic contact angle analyzer. All samples were stirred prior to analysis.

### Surface energy of film samples

Advancing angles of water and methylene iodide, polar and nonpolar solvents respectively, were measured using a Rame-Hart goniometer. Total solid surface energies, including the polar and dispersive components, were calculated using the advancing angles according to the Owens Wendt procedure.

**Example 1** - Preparation of Polyisocyanate Mixture 1

148.5 g (0.77eq) of Polyisocyanate 3300 and 1.5 g (0.0015 eq) of Siloxane Alcohol 0411 were charged to a 250 ml, 3-neck round bottom flask equipped with mechanical stirring, a cold water condenser, heating mantle, and $N_2$ inlet. The reaction mixture was stirred and heated to 80°C. After cooking for 5 hours, the NCO content reached 21.56%, just slightly higher than the theoretical value of 21.50%. The heat was removed and a cold water/ice bath was applied. The resulting product had a viscosity of 2739 mPa.s @ 25°C and the surface energy of the liquid was 23.6 dynes/cm.

**Examples 2-12** - Preparation of Polyisocyanate Mixtures 2-12

Other polyisocyanate mixtures were prepared in a similar fashion to Example 1 using different polyisocyanates and different types and amounts of siloxane. Isobutanol was used in comparison examples to show that the siloxane alcohol is needed to provide low surface energy. Comparison Examples 7, 8 and 9 use the same equivalents of alcohol as Examples 1, 3 and 5, respectively. The details of Examples 1-12 are set forth in Table 1.

## TABLE 1

| Example | 1 (Comp) | 2 (Comp) | 3 | 4 | 5 | 6 |
|---|---|---|---|---|---|---|
| Polyisocyanate | 3300 | 3300 | 3600 | 3600 | 3600 | 3600 |
| Alcohol | 0411 | 0411 | 0411 | 0411 | 0411 | 4411 |
| wt% -OH | 1 | 2 | 1 | 2 | 10 | 1 |
| Eq% -OH | 0.19 | 0.39 | 0.19 | 0.36 | 1.9 | 0.37 |
| % NCO | 21.56 | 21.21 | 22.31 | 21.99 | 19.82 | 22.52 |
| % SiO | 0.5 | 1.0 | 0.5 | 1.0 | 4.6 | 0.5 |
| Visc, cps@25 | 2739 | 2678 | 1195 | 1280 | 1310 | 1218 |
| Surface tension, dynes/cm | 24 | 24 | 23 | 23 | 23 | 25 |

| Example | 7 (Comp) | 8 (Comp) | 9 (Comp) | 10 | 11 | 12 |
|---|---|---|---|---|---|---|
| Polyisocyanate | 3300 | 3600 | 3600 | 3400 | 2410 | 2410 |
| Alcohol | iButanol | iButanol | iButanol | 0411 | 0411 | 0411 |
| wt% -OH | 0.1 | 0.1 | 0.8 | 1 | 1 | 2 |
| Eq% -OH | 0.19 | 0.19 | 1.9 | 0.19 | 0.19 | 0.36 |
| % NCO | 21.54 | 22.76 | 22.09 | 21.34 | 23.28 | 22.76 |
| % SiO | 0.0 | 0.0 | 0.0 | 0.5 | 0.5 | 1.0 |
| Visc, cps@25 | 3000 | 1242 | 1353 | 136 | 670 | 579 |
| Surface tension, dynes/cm | 47 | 45 | 44 | 23 | 23 | 22 |

**Examples 13-16** - Preparation of Two-Component Coating Compositions

Two-component coating compositions were prepared by mixing the polyisocyanate mixtures set forth in Table 2 with Polyester Polyol 670 at an NCO:OH equivalent ratio of 1.05:1.00 and adding 0.05 g of dibutyl tin dilaurate per hundred parts of polyisocyanate/polyol blend. A 4 mil drawdown bar was used to draw coatings on glass panels. The coatings were cured overnight on the laboratory bench top under ambient conditions. The details of Examples 13-16 are set forth in Table 2.

**TABLE 2**

| Example | 13 (Comp) | 14 | 15 | 16 |
|---|---|---|---|---|
| Polyisocyanate Mixture from Example | 1 | 3 | 10 | 11 |
| % SiO of Polyisocyanate Mixture | 0.5 | 0.5 | 0.5 | 0.5 |
| Polyisocyanate Mixture, g | 2.1 | 2.1 | 2.4 | 2.1 |
| Polyol, g | 5.5 | 5.6 | 5.8 | 5.7 |
| Catalyst, g | 0.01 | 0.01 | 0.01 | 0.01 |
| Surface energy, dynes/cm | 13 | 12 | 9 | 14 |
| Film clarity | cloudy | clear | clear | clear |

These examples demonstrate that it is possible to prepare clear coatings from two-component coating compositions containing the polyisocyanate mixtures according to the invention, which contain urethane groups as opposed to allophanate groups, provided that the polyisocyanate mixtures are based on polyisocyanate adducts that are prepared from 1,6-hexamethylene diisocyanate, contain isocyanurate, iminooxadiazine dione and/or uretdione groups and have a viscosity at 25°C and 100% solids of less than 2000 mPa.s.

**Examples 17-22** - Use of Polyisocyanate Mixtures as Concentrates

1 g of the polyisocyanate mixtures set forth in Table 3 were mixed by hand with 9 g of the unmodified polyisocyanates set forth in Table 3. The resulting polyisocyanate mixtures possessed low surface tension values, which demonstrate that the polyisocyanate mixtures according to the invention could be used as concentrates for diluting unmodified polyisocyanates. The details are set forth in Table 3.

**TABLE 3**

| Example | 17 | 18 | 19 | 20 (Comp) | 21 | 22 (Comp) |
|---|---|---|---|---|---|---|
| Polyisocyanate Mixture from Example | 5 | 5 | 5 | 9 | 3 | 8 |
| Polyisocyanate Mixture, g | 1 | 1 | 1 | 1 | 1 | 1 |
| Unmodified Polyisocyanate Weight, g | 3600 9 | 3200 9 | 3400 9 | 3600 9 | 3600 9 | 3600 9 |
| % SiO of Final Polyisocyanate Mixture | 0.5 | 0.5 | 0.5 | 0.0 | 0.05 | 0.0 |
| Surface tension, dynes/cm | 22 | 24 | 23 | 45 | 24 | 45 |

These examples demonstrate that the polyisocyanate mixtures according to the invention can be diluted with unmodified polyisocyanates, which did not contain siloxane groups, and still provide low surface tension. Dilution of the comparison polyisocyanates from Examples 8 and 9 with the same unmodified polyisocyanates did not change the high surface tension.

**Examples 23-28** - Preparation of Two-Component Coating Compositions

Two-component coating compositions were prepared by mixing the polyisocyanate mixtures set forth in Table 4 with Polyester Polyol 670 at an NCO:OH equivalent ratio of 1.05:1.00 and adding 0.05 g of dibutyl tin dilaurate per hundred parts of polyisocyanate/polyol blend. A 2 mil drawdown bar was used to draw coatings on standard thermoplastic polyolefin (TPO) panels. The coatings were cured overnight on the laboratory bench top under ambient conditions. The details of Examples 23-28 are set forth in Table 4.

**TABLE 4**

| Example | 23 | 24 (Comp) | 25 | 26 (Comp) | 27 | 28 (comp) |
|---|---|---|---|---|---|---|
| Polyisocyanate from example | 5 | 9 | 3 | 8 | 17 | 20 |
| % SiO of Final Polyisocyanate Mixture | 4.6 | 0.0 | 0.5 | 0.0 | 0.5 | 0.0 |
| Polyisocyanate, g | 5 | 5 | 5 | 5 | 5 | 5 |
| Catalyst, g | 0.01 | 0.01 | 0.01 | 0.01 | 0.01 | 0.01 |
| Surface energy, dynes/cm | 11 | 44 | 15 | 44 | 14 | 43 |

These examples demonstrate that coatings made from two-component coating compositions containing polyisocyanate mixtures, which were prepared from concentrates, had the same low surface energy as coatings made from two-component coating compositions containing polyisocyanate mixtures that were directly made with the same amounts of siloxane groups. Coatings prepared from the comparison polyisocyanates had high surface energies.

**Claims**

1. A polyisocyanate mixture

   i) having a monomeric diisocyanate content of less than 3% by weight,
   ii) having a urethane group content of more than 50 equivalent %, based on the total equivalents of urethane and allophanate groups, and
   iii) containing siloxane groups (calculated as SiO, MW 44) in an
   amount of 0.002 to 50% by weight,
   wherein the preceding percentages are based on the solids content of the polyisocyanate mixture and wherein the siloxane groups are incorporated by reacting

   a) an isocyanate group from a polyisocyanate adduct containing at least 60% by weight, based on the total weight of the polyisocyanate adduct, of a polyisocyanate adduct which is prepared from 1,6-hexamethylene diisocyanate, contains isocyanurate, iminooxadiazine dione and/or uretdione groups and has a viscosity at 25°C and 100% solids of less than 2000 mPa.s, with
   b) a compound containing one or more hydroxyl groups directly
   attached to a carbon atom and one or more siloxane groups
   to form urethane groups,
   wherein the minimum ratio of siloxane containing compounds to polyisocyanate adduct is 0,01
   millimoles of siloxane-containing compounds
   for each mole of polyisocyanate adduct.

2. The polyisocyanate mixture of Claim 1 wherein said compound contains one hydroxyl group directly attached to a carbon atom and one or more siloxane groups.

3. The polyisocyanate mixture of Claim 1 wherein said polyisocyanate mixture has a urethane group content of more than 70 equivalent %, based on the total equivalents of urethane and allophanate groups.

4. The polyisocyanate mixture of Claim 2 wherein said polyisocyanate mixture has urethane group content of more than 70 equivalents %, based on the total equivalents of urethane and allophanate groups.

5. The polyisocyanate mixture of Claim 1 wherein said polyisocyanate mixture has a urethane group content of more than 90 equivalent %, based on the total equivalents of urethane and allophanate groups.

6. The polyisocyanate mixture of Claim 2 wherein said polyisocyanate mixture has urethane group content of more than 90 equivalent %, based on the total equivalents of urethane and allophanate groups.

7. The polyisocyanate mixture of Claim 1 wherein the polyisocyanate mixture contains 0.2 to 10% by weight, based on solids, of siloxane groups.

8. The polyisocyanate mixture of Claim 2 wherein the polyisocyanate mixture contains 0.2 to 10% by weight, based on solids, of siloxane groups.

9. The polyisocyanate mixture of Claim 3 wherein the polyisocyanate mixture contains 0.2 to 10% by weight, based on solids, of siloxane groups.

10. The polyisocyanate mixture of Claim 4 wherein the polyisocyanate mixture contains 0.2 to 10% by weight, based on solids, of siloxane groups.

11. The polyisocyanate mixture of Claim 5 wherein the polyisocyanate mixture contains 0.2 to 10% by weight, based on solids, of siloxane groups.

12. The polyisocyanate mixture of Claim 6 wherein the polyisocyanate mixture contains 0.2 to 10% by weight, based on solids, of siloxane groups.

13. The polyisocyanate mixture of Claim 1 wherein the polyisocyanate mixture contains 10 to 40% by weight, based on solids, of siloxane groups.

14. The polyisocyanate mixture of Claim 2 wherein the polyisocyanate mixture contains 10 to 40% by weight, based on solids, of siloxane groups.

15. The polyisocyanate mixture of Claim 3 wherein the polyisocyanate mixture contains 10 to 40% by weight, based on solids, of siloxane groups.

16. The polyisocyanate mixture of Claim 4 wherein the polyisocyanate mixture contains 10 to 40% by weight, based on solids, of siloxane groups.

17. The polyisocyanate mixture of Claim 5 wherein the polyisocyanate mixture contains 10 to 40% by weight, based on solids, of siloxane groups.

18. The polyisocyanate mixture of Claim 6 wherein the polyisocyanate mixture contains 10 to 40% by weight, based on solids, of siloxane groups.

19. A two-component coating composition containing the polyisocyanate mixture of Claim 1 and a compound containing isocyanate-reactive groups.


**Patentansprüche**

1. Polyisocyanatgemisch, das

i) einen Gehalt an monomerem Diisocyanat von weniger als 3 Gew. -% aufweist,
ii) einen Urethangruppengehalt von mehr als 50 Äquivalent-%, bezogen auf die gesamten Äquivalente von Urethan- und Allophanatgruppen, aufweist und
iii) Siloxangruppen (berechnet als SiO, MW 44) in
einer Menge von 0,002 bis 50 Gew.-% enthält, wobei die obigen Prozentanteile auf dem Feststoffgehalt des Polyisocyanatgemischs basieren und die Einführung der Siloxangruppen durch Umsetzung

a) einer Isocyanatgruppe eines Polyisocyanataddukts, das mindestens 60 Gew.-%, bezogen auf das Gesamtgewicht des Polyisocyanataddukts, eines Polyisocyanataddukts enthält, das aus 1,6-Hexamethylen-diisocyanat hergestellt wird, Isocyanurat-, Iminooxadiazindion- und/oder Uretdiongruppen enthält und eine Viskosität bei 25°C und 100% Feststoffgehalt von weniger als 2000 mPa.s aufweist, mit
b) einer Vebindung mit einer oder mehreren direkt an ein Kohlenstoffatom gebundenen Hydroxylgruppen

EP 2 054 457 B1

und einer oder mehreren Siloxangruppen unter Bildung von Urethangruppen erfolgt, wobei sich das minimale Verhältnis von siloxanhaltigen Verbindungen zu Polyisocyanataddukt auf 0,01 Millimol siloxanhaltige Verbindungen pro Mol Polyisocyanataddukt beläuft.

2. Polyisocyanatgemisch nach Anspruch 1, wobei die Verbindung eine direkt an ein Kohlenstoffatom gebundene Hydroxygruppe und eine oder mehrere Siloxangruppen aufweist.

3. Polyisocyanatgemisch nach Anspruch 1, wobei das Polyisocyanatgemisch einen Urethangruppengehalt von mehr als 70 Äquivalent-%, bezogen auf die gesamten Äquivalente von Urethan- und Allophanatgruppen, aufweist.

4. Polyisocyanatgemisch nach Anspruch 2, wobei das Polyisocyanatgemisch einen Urethangruppengehalt von mehr als 70 Äquivalent-%, bezogen auf die gesamten Äquivalente von Urethan- und Allophanatgruppen, aufweist.

5. Polyisocyanatgemisch nach Anspruch 1, wobei das Polyisocyanatgemisch einen Urethangruppengehalt von mehr als 90 Äquivalent-%, bezogen auf die gesamten Äquivalente von Urethan- und Allophariatgruppen, aufweist.

6. Polyisocyanatgemisch nach Anspruch 2, wobei das Polyisocyanatgemisch einen Urethangruppengehalt von mehr als 90 Äquivalent-%, bezogen auf die gesamten äquivalente von Urethan- und Allophanatgruppen, ausweist.

7. Polyisocyanatgemisch nach Anspruch 1, wobei das Polyisocyanatgemisch 0,2 bis 10 Gew,-%, bezogen auf den Feststoffgehalt, Siloxangruppen aufweist.

8. Polyisocyanatgemisch nach Anspruch 2, wobei das Polyisocyanatgemisch 0,2 bis 10 Gew.-%, bezogen auf den Feststoffgehalt, Siloxangruppen auf weist.

9. Polyisocyanatgemisch nach Anspruch 3, wobei das Polyisocyanatgemisch 0,2 bis 10 Gew.-%, bezogen auf den Feststoffgehalt, Siloxangruppen aufweist.

10. Polyisocyanatgemisch nach Anspruch 4, wobei das Polyisocyanatgemisch 0,2 bis 10 Gew.-%, bezogen auf den Feststoffgehalt, Siloxangruppen aufweist.

11. Polyisocyanatgemisch nach Anspruch 5, wobei das Polyisocyanatgemisch 0,2 bis 10 Gew,-%, bezogen auf den Feststoffgehalt, Siloxangruppen aufweist.

12. Polyisocyanatgemisch nach Anspruch 6, wobei das Polyisocyanatgemisch 0,2 bis 10 Cew.-%, bezogen auf den Feststoffgehalt, siloxangruppen aufweist.

13. Polyisocyanatgemisch nach Anspruch 1, wobei das Polyisocyanatgemisch 10 bis 40 Gew,-%, bezogen auf den Feststoffgehalt, Siloxangruppen aufweist.

14. Polyisocyanatgemisch nach Anspruch 2, wobei das Polyisocyariatgemisch 10 bis 40 Gew.-%, bezogen auf den Feststoffgehalt, Siloxangruppen aufweist.

15. Polyisocyanatgemisch nach Anspruch 3, wobei das Polyisocyanatgemisch 10 bis 40 Gew,-%, bezogen auf den Feststoffgehalt, Siloxangruppen aufweist.

16. Polyisocyanatgemisch nach Anspruch 4, wobei das Polyisocyanatgemisch 10 bis 40 Gew.-%, bezogen auf den Feststoffgehalt, Siloxangruppen aufweist.

17. Polyisocyanatgemisch nach Anspruch 5, wobei das Polyisocyanatgemisch 10 bis 40 Gew.-%, bezogen auf den Feststoffgehalt, Siloxangruppen aufweist.

18. Polyisocyanatgemisch nach Anspruch 6, wobei das Polyisocyanatgemisch 10 bis 40 Gew.-%, bezogen auf den Feststoffgehalt, siloxangruppen aufweist.

19. zweikomponentige Beschichtungszusammensetzung, enthaltend das Polyisocyanatgemisch nach Anspruch 1 und eine gegenüber Isocyanat reaktive Gruppen enthaltende Verbindung,

**Revendications**

1.  Mélange de polyisocyanates

    i) présentait une teneur en diisocyanate monomère inférieure à 3% en poids,
    ii) présentant une teneur en groupes uréthane supérieure à 50% en equivalent, sur base de la totalité des équivalents des groupes uréthane et allophanate, et
    iii) contenant des groupes siloxane (calculé sous forme de SiO, PM 44) en une quantité de 0,002 à 50% en poids, où les pourcentage précédents sont basés sur la teneur en solides du mélange de polyisocyanates et où les groupes siloxane sont incorporés en faisant réagir

    a) un groupe isocyanate provenant d'un, produit d'addition à fonctionnalité polyisocyanate, contenant au moins 60% en poids, sur base du poids total du produit d'addition à fonctionnalité polyisocyanates, d'un produit d'addition à fonctionnalité polyisocyanates qui est préparé à partir de 1,6-hexaméthylénediisocyanate, content des groupes isocyanurate, iminooxadiazinedione et/ou uretdione et présente une viscosité 25°C et 100% de solides de moines de 2000 mPa.s, avec
    b) un composé contenant un ou plusieurs groupes hydroxyle directement attachés à un atome de carbone et un ou plusieurs groupes siloxane pour former des groupes uréthane, où le rapport minimum des composés contentant du siloxane au produit d'addition à fonctionnalité polyisocyanates est de 0,01 millimoles de composés contentant siloxane pour chaque mole de produit d'addition à fonctionnalisé polyisocyanates.

2.  Mélange de polyisocyanate selon la revendication 1, où ledit composé contient un groupe hydroxyle directement attaché à un atome de carbone et un ou plusieurs groupes siloxane.

3.  mélange de polyisocyanates selon la revendication 1, où ledit mélange de polyisocyanates présent une teneur sen groupes uréthane supérieure à 70% en équivalent, sur base de la totalité des équivalents des groupes uréthane et allophanate.

4.  Mélange de polyisocyanates selon la revendication 2, où ledit mélange de polyisocyanates présente une teneur en groupes uréthane supérieure à 70% en equivalent, sur base de la totalité des équivalents des groupes uréthane et allophanate.

5.  Mélange de polyisocyanates selon à revendication 1, où ledit mélange de polyisocyanates présente une teneur en groupes uréthanne supérieure à 90% en équivalent, sur base de la totalité des équivalents des groupes uréthane et allophanate.

6.  Mélange de polyisocyanates selon la revendication 2, ou ledit mélange de polyisocyanates présente une teneur en groupes uréthanne supérieure à 90% en équivalent, sur base de la totalité des équivalentes des groupes uréthanne et allophanate.

7.  Mélange de polyisocyanates selon la revendication 1, où le mélange de polyisocyanates contient 0,2 à 10% en poids, sur base des solides, de groupes siloxane.

8.  Mélange de polyisocyanates selon la revendication 2, où le mélange de polyisocyanates contient 0,2 à 10% en poids, sur base des solides, de groupes siloxane.

9.  Mélange de polyisocyanates selon la revendication 3, où le mélange de polyisocyanates contient 0,2 10% en poids, sur base des solides, de groupes siloxane.

10. Mélange de polyisocyanates selon la revendication 4, où le mélange de polyisocyanates contient 0,2 à 10% en poids, sur base des solides, de groupes siloxane.

11. Mélange de polyisocyanates selon la revendication 5, où le mélange de polyisocyanates contient 0,2 10% en poids, sur base des solides, de groupes siloxane.

12. Mélange de polyisocyanates selon à revendication 6, où le mélange de polyisocyanates contient 0,2 à 10% en poids, sur base des solides, de groupes siloxane.

**13.** Mélange de polyisocyanates selon la revendication 1, où le mélange de polyisocyanates contient 10 à 40% en poids, sur base des solides, de groupes siloxane.

**14.** Mélange de polyisocyanates selon la revendication 2, où le mélange de polyisocyanates contient 10 à 40% en poids, sur base des solides, de groupes siloxane.

**15.** Mélange de polyisocyanates selon la revendication 3, où le mélange de polyisocyanates contient 10 à 40% en poids, sur basse des solides, de groupes siloxane.

**16.** Mélange de polyisocyanates selon la revendication 4, où le mélange de polyisocyanates contient 10 à 40% en poids, sur base des solides, de groupes siloxane.

**17.** Mélange de polyisocyanates selon la revendication 5, où le mélange de polyisocyanates contient 10 à 40% en poids, sur base des solides, de groupes siloxane.

**18.** Mélange de polyisocyanates selon la revendication 6, où le mélange de polyisocyanates contient 10 à 40% en poids, sur base des solides, de groupes siloxane.

**19.** Composition de revêtement à deux composantes contenant le mélange de polyisocyanates selon la revendication 1 et un composé contenant des groupes réactifs avec isocyanate.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5541281 A
- US 5574122 A
- US 5576411 A
- US 5646227 A
- US 5691439 A
- US 5747629 A
- US 11096590 B
- US 11097438 B

- DE PS2616416
- EP OS3765 A
- EP OS10589 A
- EP OS47452 A
- US PS4324879 A
- DE 19611849 A
- US 5194487 A
- US 5200489 A

**Non-patent literature cited in the description**

- Silicon Compounds. Hüls America, Inc,